# EUROPÄISCHE PATENTANMELDUNG

(11) **EP 2 565 255 A1**
(43) Veröffentlichungstag der Anmeldung: **06.03.2013**
(21) Anmeldenummer: 12006170.0
(22) Anmeldetag: 30.08.2012
(51) Int. Cl.: C10G 1/00, C10G 1/02, C10G 1/10

(54) **Verfahren und Anlage zur Konvertierung von Wertstoffen**

(30) Priorität: 31.08.2011 DE 102011111526
(71) Anmelder: Bogdanow, Georg, 50389 Wesseling (DE)
(72) Erfinder: Schmedt, Clemens, 49124 Georgsmarienhütte (DE); Bogdanow, Georg, 50389 Wesseling (DE)
(74) Vertreter: Kraft, Werner

(57) **Zusammenfassung**

Die Erfindung betrifft ein Verfahren zur Konvertierung von Wertstoffen. Weiterhin wird eine Anlage zur Realisierung des Verfahrens angegeben.

Kennzeichnend ist, dass die Wertstoffe gemeinsam mit einem Gemisch von Hilfsstoffen in einem wärmeisolierten Wertstoffkonverter in einer ersten Heizphase bis etwa 110° C erwärmt werden, wodurch entstandener Wasserdampf vollständig und zusätzlich bereits verdampftes Öl aus dem Wertstoffkonverter entweichen und dass sich unmittelbar eine zweite nunmehr wasser- und sauerstofffreie Heizphase mit einem Temperaturbereich von etwa 110° bis zirka 280° C anschließt, in der die Wertstoffe, unterstützt durch die vorhandenen Hilfsstoffe, zu Öldämpfen konvertieren, wobei ein Rückstand aus Bitumen und nichtkonvertierbare Bestandteilen im Wertstoffkonverter zurückbleibt, während die Wasser- und Öldämpfe nachfolgend kondensiert werden und nichtkondensiertes Öl, gegebenenfalls unter Zugabe von Kraftstoffen aus externen Quellen, einem Blockheizkraftwerk als Brennstoff zur Verfügung gestellt wird.

## Beschreibung

### Anwendungsgebiet

Die Erfindung betrifft ein Verfahren zur Konvertierung von Wertstoffen. Weiterhin wird eine Anlage zur Realisierung des Verfahrens angegeben.

Geeignete Wertstoffe sind alle Materialen, die für eine stoffliche und energetische Verwertung mittels thermischer Verarbeitungstechniken geeignet sind,

beispielsweise Kunststoffe aller Art, Gummi, Altreifen, Altöl, Wachse und Fette, Transformatoren- und Hydrauliköl, Raffinerierückstände, Bitumen und Teer,
weiterhin pflanzliche Rohstoffe, Abfallholz, Span- und Möbelplatten, Papier, Baumschnitt, Sägeabfälle und dgl., toxische Stoffe, Farben und Imprägniermittel. Die Aufzählung erhebt keinen Anspruch auf Vollzähligkeit und ist im Prinzip beliebig erweiterbar.

### Stand der Technik

Derartige Wertstoffe können bekanntermaßen thermisch zersetzt werden. Dieser Aufgabe widmet sich eine Vielzahl von Technologien und verfahrenstechnischen Anlagen.

Beispielsweise ist nach DE 27 48 510 ein Verfahren zur Verwertung von Abfallstoffen mit brennbaren Bestandteilen bekannt, bei dem die Abfallstoffe unter Luftabschluss oder bei Luftarmut einer Verflüchtigung, Zersetzung unter Freisetzung ihrer flüchtigen Bestandteile und/oder einer unvollständigen Verbrennung unterzogen werden. Die dabei frei werdenden Gase entweichen in die Umwelt, beispielsweise bei der traditionellen Holzkohleherstellung, bzw. sie werden sinnvollerweise für andere Verfahren genutzt.

In einem Verfahren und mittels einer Vorrichtung nach DE 42 43 063 wird Abfallkunststoff in einer ersten Stufe in einer unter Druck gesetzten Atmosphäre thermisch zersetzt. Man erhält ein Pyrolyseprodukt mit einem schweren und einem leichten Bestandteil.

Beide Bestandteile werden in einer zweiten Stufe getrennt, wobei die schweren Bestandteile in die erste Stufe zurückgeführt werden. Die leichte Fraktion wird als Brennstofföl genutzt.

Nach DE 43 11 034 wird aus Kunststoffabfall ebenfalls ein Flüssigbrennstoff bzw. ein Basismaterial für die chemische Industrie hergestellt. Das Verfahren besteht im Wesentlichen darin, dass Öl als Reaktionsmedium zur Gewinnung von Polymerisationsprodukten verwendet wird. Nachfolgend werden diese voneinander getrennt. Die entstehenden koks- bzw. teerähnlichen Rückstände werden einer partiellen Hydrierung zugeführt. Bei diesem Verfahren sind Temperaturen von 250° bis 450° C,
ein definierter Druck und darüber hinaus eine Reaktorverweildauer von zirka 35 Minuten erforderlich. Bei Anwendung des Verfahrens unter Einsatz von inkonstanten bzw. undefinierten Einsatzstoffen ist die Wirksamkeit allerdings gering, und zwar wegen der hohen Investitions- und Betriebskosten. Außerdem ist das Verhältnis von 1:1 des als Reaktionsmedium verwendeten Mineralöls zum Einsatzstoff nicht akzeptabel. Der große Mineralölbedarf macht das Verfahren insgesamt unattraktiv.

In einem Verfahren nach DE 30 37 829 werden nach Erwärmung eines Abfallgemischs aus Polyolefinen und Polystyrol auf über 300° C in Anthracenöl, Kohlenteer oder in einer Flüssigkeit von geringer Flüchtigkeit Olefine und Benzolhomologen hergestellt. Nachteilig bei diesem Verfahren ist, dass das Reaktionsgemisch bei hohen Temperaturen unter Druck gehalten werden muss, weil erhebliche Mengen aromatischen Materials mit hohem Siedepunkt verarbeitet werden.

Neuere Verfahren schlagen die Verwendung von Katalysatoren vor.

In der DE 100 49 377 ist die katalytische Erzeugung von Dieselöl und Benzin aus kohlenwasserstoffhaltigen Abfällen und Ölen beschrieben. Auf Grund der Katalysatorenauswahl und der verwendeten Verfahrenstechnik kommt das Verfahren mit einer Reaktortemperatur von 350° C aus. Die Dieselausbeute beträgt etwa 65 % und die Benzinausbeute 15 %. Die Anlage lässt sich dezentral errichten. Der Katalysator vereint die katalytische Krackung, die Stabilisierung und Entchlorung von Chloranteilen des PVC. Der Katalysator, bestehend aus Natriumaluminiumsilikaten, muss allerdings in einem Umlaufverdampfer einem hochsiedenden Kohlenwasserstoff verrührt werden bei Zugabe der Abfallstoffe. Dazu werden in verschiedenen Anlagenteilen angeordnete Schleusensysteme, Pressschnecken, Rührwerke und dgl. benötigt.

Schließlich ist in der DE 10 2005 023 601 ein Verfahren zum Konvertieren eines fettsäure- und/oder fett- und/oder ölhaltigen Ausgangsmaterials in Abwesenheit von Sauerstoff bei einer Temperatur von 150° bis 850° C in einem Konvertierungsreaktor beschrieben,
der Aktivkohle enthält, so dass ein kohlenwasserstoffhaltiges Produktgasgemisch entsteht. Das Konvertierungsverfahren ist dadurch gekennzeichnet, dass der Prozess kontinuierlich betrieben wird und die Kontaktierung des Ausgangsmaterials mit der Aktivkohle in Gegenwart von Wasser und/oder eines wasserfreisetzenden Materials erfolgt. Vorzugsweise ist das Verfahren für gas- oder dampfförmiges Ausgangsmaterial geeignet.

### Aufgabenstellung

Die erfinderische Aufgabenstellung ist in der Entwicklung von Verfahrensschritten und apparativen Merkmalen zu sehen, die es ermöglichen, ein breites Spektrum von Wertstoffen der eingangs beschriebenen Art ohne Vorverarbeitung,
beispielsweise Shreddern, zu konvertieren und dadurch wieder für weitere Verwertungsarten nutzbar zu machen, nämlich die Gewinnung von Gas und Öl und darüber hinaus die Rückgewinnung von nichtkonvertierbaren Stoffen, wie Gestein oder Metalle, zum Beispiel aus Kabeln oder Leiterplatten.

### Lösung der Aufgabenstellung

Die Lösung der Aufgabenstellung ist verfahrensseitig im Patentanspruch 1 und anlagenseitig im Patentanspruch 4 angegeben.
Die jeweils untergeordneten Ansprüche enthalten zweckmäßige Ausgestaltungen.

Erfindungsgemäß wird ein Wertstoffkonverter, im Wesentlichen ein beheizbarer wärmeisolierter Behälter, mit Hilfsstoffen und mit einem Wertstoffgemisch befüllt. Letzteres kann nahezu homogen sein, als auch ein weites Stoffspektrum aufweisen.
Der Energiegehalt des Inputmaterials sollte wenigstens 6.000 kJ/kg betragen. Zwar ist das Verfahren auch unter diesem Wert funktionsfähig, allerdings müssen dann Einbußen hinsichtlich der Effektivität hingenommen werden.

Die einzusetzenden Hilfsstoffe sind:
- Essigsaure Tonerde mit einem Aluminiumgehalt von > 20 % in einer Menge von 0,5 bis 2 %, bezogen auf das Gewicht des Wertstoffgemischs; Ersatzweise können auch zink- oder zinkoxidhaltige Materialien verwendet werden.
- 0,5 bis 2 % Aktivkohle, bezogen auf das Gewicht des Wertstoffgemischs;
- 0,05 bis 0,15 % Siliziumsand, bezogen auf das Gewicht des Wertstoffgemischs;
- Öl, vorzugsweise Altöl bzw. gewonnenes Öl aus dem Konvertierungsprozess, in einer Menge von 3 bis 8 %, bezogen auf das Gewicht des Wertstoffgemischs.

Der Wertstoffkonverter wird vor dem ersten Anfahren mit dem Wertstoffen und den Hilfsstoffen, wie angegeben, beschickt. Bei nachfolgenden Chargen müssen die verbrauchten Hilfsstoffe lediglich ersetzt werden. Danach wird er luftdicht verschlossen. Mit den Wertstoffen eingebrachtes Wasser und der enthaltene Luftsauerstoff sind nicht prozessschädlich. Es gilt jedoch, je trockener das Wertstoffgemisch ist, desto kürzer ist die Aufheizphase. Der Wertstoffkonverter arbeitet drucklos.

Es folgt das Aufheizen des Wertstoffkonverters. Dazu besitzt dieser eine Heizeinrichtung mit in Keramik eingelassenen elektrischen Heizelementen. Die Heizeinrichtung ist am Boden des Wertstoffkonverters flexibel gelagert angeordnet. Das Aufheizen erfolgt bis zu einer Temperatur von 280° C.

Zunächst entweicht in einer Heizphase bis etwa 110° C entstandener Wasserdampf und bereits verdampftes Öl aus dem Konverter. Dieses Gemisch wird anschließend in wenigstens einem Kondensationselement, nämlich einem Wärmetauscher, kondensiert. Dabei trennt sich Öl von Wasser. Vorteilhafterweise sind mehrere Kondensationselemente in Reihe geschaltet.

Das in dieser Heizphase gewonnene Öl ist qualitativ nicht hochwertig. Es kann daher vorteilhaft als Hilfsstoff bei der Beschickung des Wertstoffkonverters eingesetzt werden. Das kondensierte Wasser wird abgeführt und fachgerecht entsorgt.

In der zweiten Heizphase im Temperaturbereich von 110° bis 280° C ist der Wertstoffkonverter wasser- und sauerstofffrei. Damit ist auch die in solchen gattungsgemäßen Anlagen latent vorhandene Explosionsgefahr gebannt. Der in dieser Phase aus dem Wertstoffgemisch entstandene Dampf wird ebenfalls kondensiert, und zwar in einem weiteren Kondensationselement. Auch hier empfiehlt es sich,
mehrere Kondensationselemente in Reihe hintereinander anzuordnen.

Das in dieser Phase gewonnene Öl kann zwar ohne weitere Verarbeitungsschritte verwendet werden, sollte aber je nach Bestandteilen noch einmal aufgearbeitet werden. Es verbleibt ein Rest von nicht kondensierten Öldämpfen.

Diese sind als Brennstoff für ein nachgeschaltetes Blockheizkraftwerk vorgesehen, gegebenenfalls gemeinsam mit Diesel oder Schweröl im Mischbetrieb.

Die im Blockheizkraftwerk erzeugte Wärme und Elektroenergie sind bedarfsweise wieder in den Prozess einführbar. Die Emissionen des Blockheizkraftwerks entsprechen denen eines KFZ- Motors und sind somit unproblematisch.

Am Boden des Konverters verbleibt eine Bitumenschicht bzw. ein bitumenähnlicher Rest. Dieser muss abgelassen, abgesaugt oder anderweitig aus dem Konverter entnommen werden. Gleiches gilt für zurückbleibende Metallteile und sonstige Feststoffe.

Eine Anlage zur Realisierung des Verfahrens besteht im Wesentlichen aus mindestens einem Wertstoffkonverter, der in Wirkverbindung mit wenigstens einem Kondensationselement für das konvertierte Produkt aus der Heizphase bis etwa 110° C und mit wenigstens einem weiteren Kondensationselement für das konvertierte Produkt aus der Heizphase 110° bis 280° C steht. Die Kondensationselemente sind als Kühler und/oder Wärmetauscher ausgebildet, wobei jeweils mehrere Kondensationselemente in Reihe geschaltet werden können. Weiterhin sind entsprechende Rohrverbindungen,
beinhaltend Ablassventile für Wasser und Öl, Absperrorgane sowie technische Mittel zum Befüllen des Wertstoffkonverters und zur Entnahme von Bitumen-, Metall- und anderen Rückständen vorhanden.

Der Konverter selbst ist nicht an eine bestimmte geometrische Form gebunden. Er muss jedoch mit einer Heizeinrichtung ausgerüstet sein, die vorteilhaft an der Bodenfläche platziert ist. Die Heizeinrichtung ist ein kompaktes stoßunempfindliches Keramikteil mit eingelassenen elektrischen Heizelementen. Dieses ist am Boden des Wertstoffkonverters flexibel gelagert angeordnet. Der Konverter ist allseitig wärmeisoliert und lässt sich nach oben mittels eines luftdicht schließenden Deckels öffnen.

Somit ist ein Verfahren einschließlich zugehöriger apparativer Mittel angegeben, mit dem nahezu alle organisch basierten Materialien konvertierbar sind.

Dabei entstehen schwachenergetische, Sauerstoff enthaltende Verdampfungsprodukte nur im Niedrigtemperaturbereich, was Grundlage für eine hohe Verfahrens- und Anlagensicherheit ist und eine Wirtschaftlichkeit gewährleistet.

Darüber hinaus hat die Anlage keine bewegten Teile, wie Förderer, Shredder oder Rührer, wodurch dahingehend kein Ausfallrisiko besteht. Geräuschemissionen sind gering.

Sie beschränken sich auf Strömungsgeräusche und akustische Emissionen aus dem nachgeschalteten Blockheizkraftwerk. Im Wertstoff enthaltene Metalle oxidieren nicht. Das Verfahren eignet sich daher auch zur Metallrückgewinnung.

### Ausführungsbeispiel

Das erfindungsgemäße Verfahren zur Konvertierung von Wertstoffen sowie die sich daraus ergebenden apparativen anlagentechnischen Merkmale werden nachfolgend an Hand von Zeichnungen näher erläutert.

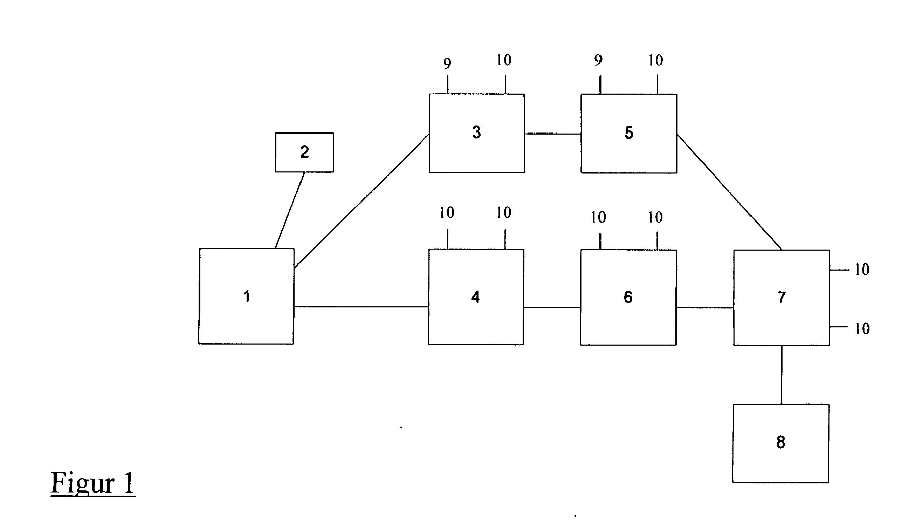

Dazu ist die verfahrenstechnische Seite in Figur 1 in einem Fließschema dargestellt.

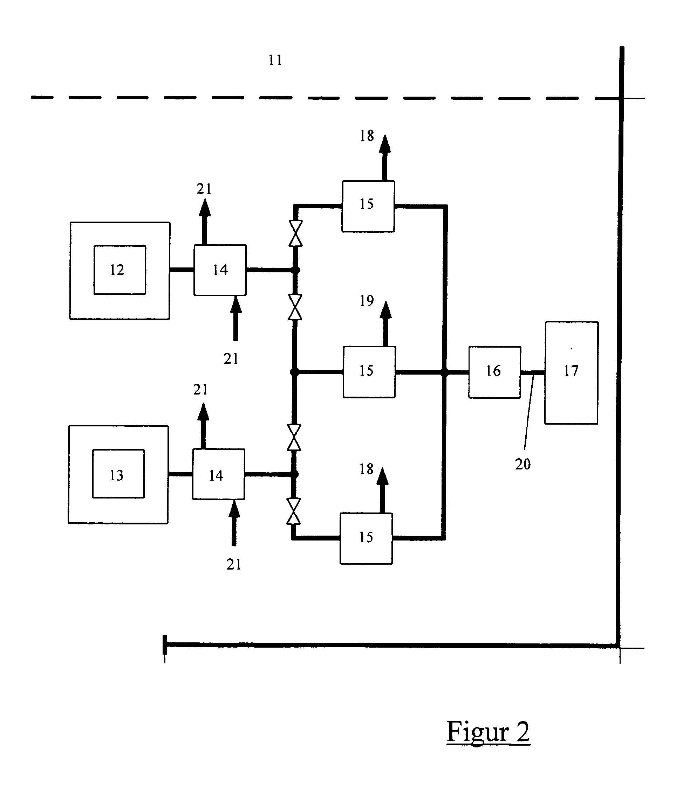

Figur 2 zeigt ein Beispiel für eine Anlage zur Konvertierung von Wertstoffen mit nachgeschaltetem Blockheizkraftwerk.

Gemäß Figur 1 wird ein drucklos arbeitender Wertstoffkonverter 1 mit einem Wertstoffgemisch und Hilfsstoffen mittels geeigneter Anlagentechnik oder von Hand befüllt. Vor dem ersten Anfahren sind die nachfolgend genannten Füllmengen einzuhalten, wobei bei nachfolgenden Chargen nur die verbrauchten Hilfsstoffe zu ersetzen sind:
- Wertstoffgemisch gemäß dem Fassungsvermögen des Wertstoffkonverters 1; zusätzlich folgende Hilfsstoffe:
- Essigsaure Tonerde mit einem Aluminiumgehalt von > 20 % in einer Menge von 0,5 bis 2 %, bezogen auf das Gewicht des Wertstoffgemischs; Ersatzweise können auch zink- oder zinkoxidhaltige Materialien verwendet werden.
- 0,5 bis 2 % Aktivkohle, bezogen auf das Gewicht des Wertstoffgemischs;
- 0,05 bis 0,15 % Siliziumsand, bezogen auf das Gewicht des Wertstoffgemischs;
- Öl, vorzugsweise Altöl bzw. gewonnenes Öl aus dem Konvertierungsprozess, in einer Menge von 3 bis 8 %, bezogen auf das Gewicht des Wertstoffgemischs.

Nach dem Befüllen wird der Wertstoffkonverter 1 luftdicht verschlossen und beheizt. Zum Heizregime wird auf die vorstehenden Ausführungen verwiesen.
Dem Wertstoffkonverter 1 sind die Kondensationselemente 3, 5 und 7 nachgeschaltet.

Über diese erfolgt die Kondensation der im Wertstoffkonverter 1 entstehenden Öl- und Wasserdämpfe aus der Heizphase bis 110° C.

Die Öldämpfe aus der Heizphase 110° bis 280° C kondensieren in den dargestellten Kondensationselementen 4, 6 und 7. Mit 9 sind Entnahmestellen für Wasser bzw. mit 10 Entnahmestellen für konvertiertes Öl bezeichnet.

Nichtkondensierter Öldampf wird nach Verlassen des Kondensationselements 7 einem Blockheizkraftwerk 8 als Treibstoff zugeführt. Das im Wertstoffkonverter 1 verbleibende Bitumen fließt in den Behälter 2, aus dem es nach Abkühlung entnommen werden kann. Metalle und andere nichtkonvertierbare Teile werden nach dem Abkühlen des Wertstoffkonverters 1mit geeigneten Mitten entnommen.

In Figur 2 ist eine Anlage zur Konvertierung von Wertstoffen, nämlich Abfällen, in Form einer Technikumsanlage angegeben. Die Anlage ist für Einsatzmengen < 250 t/Jahr ausgelegt. Es werden Abfälle und Materialmischungen verarbeitet, eingeschlossen solche, die aus der mechanischen Abfallbehandlung stammen.

Bei der in Figur 2 dargestellten Anlage handelt es sich um eine zweistrangige Auslegung für ein quasikontinuierliches Betriebsregime.

Die angelieferten Wertstoffe werden einem Bunker 11 entnommen. Hauptbestandteil der Anlage sind die beiden Wertstoffkonverter 12 und 13, in denen der Konvertierungsprozess stattfindet. Das jeweilige Fassungsvolumen beträgt 5,6 m³, was bei einer Schüttdichte von ca. 250 kg/m³ zirka 1.400 kg Inputmateial (Wertstoffgemisch plus Hilfsstoffe) entspricht. Bei der Erstbefüllung der Wertstoffkonverter 12 und 13 werden pro Konverter etwa 400 Getriebe- und/oder Turbinenöl als Wärmeträger eingesetzt. Die Wertstoffkonverter 12 und 13 sind so ausgelegt, dass ein Sauerstoffeintrag während des Aufheizprozesses sicher verhindert wird. Ansonsten ist die gesamte Anlage drucklos ausgeführt.

Alle Absperrorgane sind handbetätigt. Die elektrische Beheizung der beiden Wertstoffkonverter 12 und 13 besitzt eine Not-Abschaltung. Die Aufheizung des Inputmaterials auf die erforderliche Reaktionstemperatur bis zu 280° C erfolgt jeweils mittels elektrisch beheizter Bodenplatten aus Keramikmaterial in einem Zeitraum von bis zu 5 Tagen. Zur Temperaturregelung werden fachübliche Regler eingesetzt. Sie umfasst die gesamte Zeitdauer des Aufheizprozesses.

Die während der Konvertierung entstehenden Gase und Dämpfe werden mittels Wasserkühlern 14 abgekühlt und in nachgeschalteten Wärmetauschern 15 und 16 kondensiert und schließlich einem Blockheizkraftwerk 17 als Verbrennungsgas zugeführt. Aus den Wärmetauschern 15 wird mittels integrierter Entnahmevorrichtungen 18 konvertiertes Öl 18 bzw. 19 Schwelwasser entnommen.

Aus bereits durchgeführten Laborversuchen ergibt sich folgende Massebilanz, hochgerechnet für 1.000 kg Inputmaterial mit ca. 18.000 kJ/kg Energiegehalt:
- Konvertiertes Öl ca. 53 % = ca. 530 kg,
- Konvertierter Koks ca. 23 % = ca. 230 kg,
- Schwelwasser ca. 18 % = ca. 180 kg,
- Konvertiertes Gas ca. 5,2 % = ca. 52 kg,
- Filterrückstand ca. 0,8 % = ca. 8 kg.

Der konvertierte Koks und das Schwelwasser 19 sind ordnungsgemäß zu entsorgen, während das konvertierte Öl 18 und das konvertierte Gas 20 für weitere Verwendungen, wie bereits beschrieben, zur Verfügung stehen.

### Bezugszeichenliste

- 1: Wertstoffkonverter,
- 2: Rückstand,
- 3: Kondensationselement für Öl- und Wasserdämpfe aus der Heizphase bis 110° C,
- 4: Kondensationselement für Öldämpfe aus der Heizphase 110° C bis 280° C,
- 5: Kondensationselement für Öl- und Wasserdämpfe aus der Heizphase bis 110° C,
- 6: Kondensationselement für Öldämpfe aus der Heizphase 110° C bis 280° C,
- 7: Kondensationselement Öldämpfe aus beiden Heizphasen,
- 8: Blockheizkraftwerk,
- 9: Entnahmestelle für Wasser,
- 10: Entnahmestelle für Öl,
- 11: Bunker,
- 12: Wertstoffkonverter,
- 13: Wertstoffkonverter,
- 14: Wasserkühler,
- 15: Wärmetauscher,
- 16: Wärmetauscher,
- 17: Blockheizkraftwerk,
- 18: Konvertiertes Öl,
- 19: Schwelwasser,
- 20: Konvertiertes Gas,
- 21: Kühlwasser.

## Patentansprüche

1. Verfahren zur Konvertierung von Wertstoffen, **dadurch gekennzeichnet, dass** die Wertstoffe gemeinsam mit einem Gemisch von Hilfsstoffen in einem wärmeisolierten Wertstoffkonverter in einer ersten Heizphase bis etwa 110° C erwärmt werden,
wodurch entstandener Wasserdampf vollständig und zusätzlich bereits verdampftes Öl aus dem Wertstoffkonverter (1) entweichen, dass sich unmittelbar eine zweite nunmehr wasser- und sauerstofffreie Heizphase mit einem Temperaturbereich von etwa 110° bis zirka 280° C anschließt, in der die Wertstoffe, unterstützt durch die vorhandenen Hilfsstoffe, zu Öldämpfen konvertieren, wobei ein Rückstand aus Bitumen in den Behälter (2) abfließt und nichtkonvertierbare sowie nichtkonvertierte Bestandteile im Wertstoffkonverter (1) zurückbleiben, dass die Wasser- und Öldämpfe aus der ersten Heizphase in wenigstens einem Kondensationselement (3; 5; 7) kondensiert und getrennt werden und das verdampfte Öl aus der zweiten Heizphase in wenigstens einem weiteren Kondensationselement (4; 6; 7) kondensiert wird, dass nichtkondensiertes Öl, gegebenenfalls unter Zugabe von Kraftstoffen aus externen Quellen,
einem Blockheizkraftwerk (8) als Brennstoff zur Verfügung steht und das gewonnene Wasser fachgerecht entsorgt wird, dass das Inputgemisch, bestehend aus Wert- und Hilfsstoffen, für die erstmalige Beschickung des Wertstoffkonverters (1) wie folgt zusammengesetzt ist:
- Wertstoffe gemäß dem Fassungsvermögen des Wertstoffkonverters (1),
- Essigsaure Tonerde mit einem Aluminiumgehalt von > 20 % in einer Menge von 0,5 bis 2 %, bezogen auf das Gewicht des Wertstoffgemischs; Ersatzweise können auch zink- oder zinkoxidhaltige Materialien verwendet werden.
- 0,5 bis 2 % Aktivkohle, bezogen auf das Gewicht des Wertstoffgemischs;
- 0,05 bis 0,15 % Siliziumsand, bezogen auf das Gewicht des Wertstoffgemischs;
- Öl, vorzugsweise Altöl bzw. gewonnenes Öl aus dem Konvertierungsprozess, in einer Menge von 3 bis 8 %, bezogen auf das Gewicht des Wertstoffgemischs,
wobei die verbrauchten Hilfsstoffe bei nachfolgenden Chargen zu ergänzen sind,
und schließlich dass der gesamte Konvertierungsprozess drucklos unter Luftabschluss durchgeführt wird.

2. Verfahren nach Anspruch 1, **dadurch gekennzeichnet, dass** zum Zweck der Energieeinsparung möglichst wenig Wasser in den Wertstoffkonverter (1) eingebracht wird.

3. Verfahren nach Anspruch 1, **dadurch gekennzeichnet, dass** dem eigentlichen Konvertierungsprozess mehrere Kondensationsstufen folgen.

4. Anlage zur Konvertierung von Wertstoffen, **gekennzeichnet durch** die nachfolgend angegebenen apparativen bzw. anlagentechnischen Merkmale:
- Einem drucklos unter Luftabschluss arbeitenden wärmeisolierten Wertstoffkonverter (1), an dessen Bodenfläche eine aus Keramikwerkstoff bestehende Heizeinrichtung mit integrierten elektrischen Heizelementen befindlich ist, wobei die Heizeinrichtung flexibel gelagert ist;
- Dem Wertstoffkonverter (1) nachgeordnete Kondensationselemente (3, 5 und 7) zur Kondensation und Trennung von Wasser- und Öldämpfen aus einer ersten Heizphase bis etwa 110° C, wobei wenigstens ein Kondensationselement (3, 5 oder 7) vorhanden ist;
- dem Wertstoffkonverter (1) nachgeordnete Kondensationselemente (4, 6 und 7) zur Kondensation von Öldämpfen aus einer zweiten Heizphase von etwa 110° C bis etwa 280° C, wobei wenigstens ein Kondensationselement (4, 6 oder 7) vorhanden ist;
- Einem den Kondensationselementen (3, 5, 4, 6 und/oder 7) nachgeordneten Blockheizkraftwerk (8);
- Entnahmestellen für kondensiertes Wasser (9) aus der ersten und kondensiertes Öl (10) aus der ersten und zweiten Heizphase,
- Technische Mittel zum Befüllen und Entleeren des Wertstoffkonverters (1).

5. Anlage nach Anspruch 4, **dadurch gekennzeichnet, dass** zwei oder mehr Wertstoffkonverter (12 und 13) parallel angeordnet sind.

6. Anlage nach Anspruch 4, **dadurch gekennzeichnet, dass** die angelieferten Wertstoffe in einem Bunker (11) zur Beschickung von zwei Wertstoffkonvertern (12 und 13) bereitstehen, dass diesen Wasserkühler (14), Wärmetauscher (15 und 16) und ein Blockheizkraftwerk (17) nachgeordnet sind und dass die Wärmetauscher (15) Entnahmevorrichtungen für konvertiertes Öl (18) bzw. Schwelwasser (19) enthalten.
